# EUROPÄISCHE PATENTSCHRIFT

(11) **EP 2 740 072 B1**
(45) Veröffentlichungstag und Bekanntmachung des Hinweises auf die Patenterteilung: **12.09.2018**
(21) Anmeldenummer: 12743662.4
(22) Anmeldetag: 06.07.2012
(51) Int. Cl.: G06K 9/00, G08G 1/16

(54) **VERFAHREN ZUR FAHRSPURERKENNUNG MITTELS EINER KAMERA**
METHOD FOR DETECTING A LANE BY MEANS OF A CAMERA
PROCÉDÉ DE RECONNAISSANCE D'UNE VOIE DE CIRCULATION AU MOYEN D'UNE CAMÉRA

(30) Priorität: 05.08.2011 DE 102011109569
(43) Veröffentlichungstag der Anmeldung: 11.06.2014
(73) Patentinhaber: Conti Temic Microelectronic GmbH, 90411 Nürnberg (DE)
(72) Erfinder: ZOBEL, Matthias, 88142 Wasserburg (DE); HEINRICH, Stefan, 77855 Achern (DE); KLEIN, Wladimir, 88131 Lindau (DE)
(86) Internationale Anmeldenummer: PCT/DE2012/100202
(87) Internationale Veröffentlichungsnummer: WO 2013/020550

(56) Entgegenhaltungen:
- EP-A2- 1 089 231
- EP-A2- 1 383 100
- EP-A2- 1 398 684
- EP-A2- 2 189 349
- WO-A1-2004/047449
- DE-A1- 10 336 638
- DE-A1-102004 011 699
- DE-A1-102004 057 296
- DE-A1-102005 039 167
- DE-A1-102005 046 672
- DE-A1-102005 063 199
- DE-A1-102009 009 211
- DE-A1-102009 039 450
- CARAFFI C ET AL: "Off-Road Path and Obstacle Detection Using Decision Networks and Stereo Vision", IEEE TRANSACTIONS ON INTELLIGENT TRANSPORTATION SYSTEMS, IEEE, PISCATAWAY, NJ, USA, vol. 8, no. 4, 1 December 2007 (2007-12-01), pages 607-618, XP011513050, ISSN: 1524-9050, DOI: 10.1109/TITS.2007.908583
- JEONG P ET AL: "Efficient and Robust Classification Method Using Combined Feature Vector for Lane Detection", IEEE TRANSACTIONS ON CIRCUITS AND SYSTEMS FOR VIDEO TECHNOLOGY, IEEE SERVICE CENTER, PISCATAWAY, NJ, US, vol. 15, no. 4, 1 April 2005 (2005-04-01), pages 528-537, XP011129359, ISSN: 1051-8215, DOI: 10.1109/TCSVT.2005.844453

## Beschreibung

Die Erfindung betrifft ein Verfahren zur Erkennung einer Fahrspur mittels einer Fahrzeugkamera.

Kamerabasierte Fahrerassistenzsysteme, die den Verlauf der eigenen Fahrspur anhand von Fahrbahnmarkierungen erkennen wie z.B. eine Fahrspurverlassenswarnung (Lane departure warning, LDW), sind mittlerweile im Markt etabliert und ihr Einsatz ist in bestimmten Anwendungsgebieten bereits gesetzlich vorgeschrieben.

Spurhalteunterstützungsassistenzsysteme können zudem Eingriffe in die Fahrzeuglenkung vornehmen. So zeigt beispielsweise EP 1414692 B1 ein Verfahren zum Betreiben eines Fahrerassistenzsystems eines Fahrzeugs mit einer servounterstützten Lenkung. Eine CCD-Kamera erfasst das Fahrzeugumfeld und schätzt daraus insbesondere den Fahrspurverlauf. Die Umfelddaten werden mit Bewegungsdaten des Fahrzeugs verglichen, woraus eine Unterstützung der Fahrerlenkung eingeleitet werden kann.

Typischerweise erkennen heutige Fahrerassistenzsysteme den Verlauf der Markierungen der eigenen und der benachbarten Fahrspuren und schätzen daraus die Lage des eigenen Fahrzeugs relativ zu den Spurmarkierungen.

DE 10 2005 033 641 A1 beschreibt eine Anzeigevorrichtung mit einer Fahrspurerfassung, bei der Spurmarkierungen der erfassten Fahrspur derart in einer Anzeige dargestellt werden, dass eine Qualität der Fahrspurerfassung erkennbar ist. Für eine Einteilung der Qualität der Fahrspurerkennung in eine gute, schlechte und unmögliche Erkennung ist es möglich, beispielsweise einen Helligkeits- oder Farbkontrast zu definieren, der für eine gute oder der zumindest für eine schlechte Erkennung erforderlich ist. Falls die Fahrbahnmarkierung für eine gewisse Strecke unterbrochen ist und daher nicht erfasst werden kann, so dass für den Zwischenraum nur eine Extrapolation der angrenzenden Fahrbahnmarkierungen möglich ist, wird dies durch eine andere Darstellung der Spurmarkierung gewählt als bei einer durchgängig und sicher erkannten Fahrbahnmarkierung. Weiterhin ist es auch möglich, dass Fahrbahnbegrenzungsmarkierungen, wie z.B. Seitenpfosten, in die Fahrspurerkennung mit einbezogen werden.

Aus der DE 10 2005 038 167 A1 ist ein Fahrerassistenzsystem zur Fahrerwarnung bei einem drohenden Verlassen der Fahrspur bekannt, welche Mittel zur Erkennung einer Fahrbahnrand- und/oder Fahrspurmarkierung und/oder eines Fahrbahnrands, Mittel zur Identifikation von baulichen Begrenzungen der Fahrbahn und/oder der Fahrspur aus den erfassten erhabenen Objekten sowie Mittel zur Ausgabe einer Warnung bei einem drohenden Abkommen von der Fahrbahn umfasst.

Die DE 10 2004 057 296 A1 beschreibt ein Lane-Departure-Warning mit Unterscheidung zwischen Fahrbahnrandmarkierung und baulicher Begrenzung des Fahrbahnrandes. Es wird zusätzlich zu dem bildgebenden Sensor mindestens ein abstandgebender Sensor mit einer Auswertevorrichtung verbunden, mit dem der Abstand zu gegenüber der Fahrbahnoberfläche erhabenen Objekten im Bereich des Fahrbahnrandes, insbesondere einer baulichen Begrenzung des Fahrbahnrandes bestimmbar ist und/oder mit dem Abstand zu einer Kante, an der die Fahrbahnoberfläche im Bereich des Fahrbahnrandes endet und zu einem tieferen Umland hin abfällt, wie beispielsweise bei erhabenen Asphaltdecken oder im Anschluss auf den Fahrbahnrand parallel zur Fahrbahn verlaufenden Gräben oder Wasserkanälen, bestimmbar ist.

In dem Paper von Caraffi C et al: "Off-Road Path and Obstacle Detection Using Networks and Stereo Vision", IEEE Transactions on intelligent transportation systems, IEEE, Piscataway, NJ, USA, Bd. 8, Nr. 4, 1. Dezember 2007 (2007-12-01), Seiten 607 - 618, XP011513050, ISSN: 1524-9050, DOI: 10.1109/TITS.2007.908583, wird ein System zur Wegerkennung auf einem Offroad-Gelände und sowie zur Hinderniserkennung beschrieben. Für die Hinderniserkennung erfolgt z. B. eine Stereorekonstruktion. Für die Wegeerkennung erfolgt zunächst ein Clustern des Bilds. Um festzustellen, ob ein solches Cluster zur Wegeoberfläche angehört, werden anschließend einerseits die Zustände der Cluster wie z. B. die Homogenität, andererseits der Fahrzeugzustand wie z. B. die lineare Geschwindigkeit oder der Lenkwinkel einbezogen.

In dem Paper Jeong P et al: "Efficient and Robust Classification Method using combined feature vector for lane detection", IEEE transactions on circuits and systems for video technology, IEEE Service Center, Piscataway, NJ, US, Bd. 15, Nr. 4, 1. April 2005 (2005-04-01), Seiten 528-537, XP011129359, ISSN: 1051-8215, DOI: 10.1109/TCSVT.2005.844453, ist ein System zur Fahrspurerkennung mittels eines K-Means Klassifikators beschrieben. Dabei werden Fahrbahnmarkierungen zur Trennung der Fahrbahn von Nicht-Fahrbahnbereichen verwendet. Zwischen den Fahrbahnmarkierungen wird ein Referenzwert für einen Texturvektor ermittelt, welcher später mit Texturvektoren aus dem Fahrbahnrand verglichen wird. Ohne vorhandene Fahrbahnmarkierungen wird das Bild mittels Image-Splitting in einen mittleren und äußeren Bereich zur Ermittlung des Referenz-Texturvektors.

Im Gegensatz zu Autobahnen und ausgebauten Bundesstraßen gibt es vielfach Straßen, die keine bzw. nur teilweise Fahrbahnmarkierungen aufweisen. Beispielhaft ist auf vielen Landstraßen nur die Fahrbahnmitte als Trennung der beiden Fahrspuren markiert. Die seitlichen Begrenzungen fehlen meist und der Fahrer orientiert sich an Leitpfosten oder der Umgebung, bzw. am seitlichen Abschluss des Straßenbelags. Heutige Fahrerassistenzsysteme zur Spurerkennung bemerken das Fehlen von Markierungen und schalten entweder komplett ab, gehen in entsprechende Modi, in denen nur die vorhandenen Markierungen berücksichtigt werden oder berücksichtigen die Qualität der Fahrspurerfassung bei einer Anzeige der Fahrspur wie oben beschrieben.

Da die Anforderungen an Fahrerassistenzsysteme ständig zunehmen, gerade im Hinblick auf autonome Sicherheitsfunktionen, wie Notbrems- und Ausweichassistenten, müssen zukünftige Systeme in der Lage sein, unabhängig von dem Vorhandensein von Markierungen die eigene Fahrspur zu erkennen.

Der Erfindung liegt daher die Aufgabe zugrunde, ein Verfahren zur Erkennung der Fahrspur anzugeben, das trotz unvollständiger oder fehlender Fahrbahnmarkierungen zuverlässig die Fahrspur detektieren und ausgeben kann.

Diese Aufgabe wird durch die Merkmale der unabhängigen Ansprüche gelöst. Vorteilhafte Weiterbildungen der Erfindung ergeben sind aus den Unteransprüchen, wobei auch Kombinationen und Weiterbildungen einzelner Merkmale miteinander denkbar sind.

Der Erfindung liegt die Idee zugrunde, dass der Fahrbahnrand (unabhängig von der Existenz von Fahrspurmarkierungen) im Allgemeinen mittels einer Kamera detektiert werden kann und aus der Lage des Fahrbahnrandes die Fahrspur geschätzt werden kann oder die Lage des Fahrbahnrandes bei der Erkennung der Fahrspur zumindest berücksichtigt wird.

Die Detektion von Fahrbahnrändern ist eine Herausforderung, da die Oberflächen von Fahrbahnen und Fahrbahnrändern im Allgemeinen unterschiedlich beschaffen sind und es somit kein universelles Fahrbahn-Fahrbahnrand-Muster gibt.

Ein erfindungsgemäßes Verfahren zur Fahrspurerkennung umfasst die folgenden Schritte: Bildaufnahme, Korridorerkennung und Strukturerkennung.

Die Korridorerkennung dient dazu, aus der vorhandenen Bildinformation als erstes den Freiraum vor dem Fahrzeug zu ermitteln und dadurch die anschließende Strukturerkennung, die den tatsächlichen Fahrbahnrand aus der Bildinformation ermittelt, zu steuern.

Im folgenden Schritt, der Strukturerkennung, kommen vorzugsweise Mustererkennungsverfahren zum Einsatz, die unter Berücksichtigung des ermittelten Korridors den Verlauf des Fahrspurrands bestimmen. Der ermittelte Verlauf des Fahrbahnrands entspricht in der Regel dem Rand der Fahrspur.

Ein erfindungsgemäßes Verfahren bietet den Vorteil, dass die Berücksichtigung des Fahrbahnrandes die Verfügbarkeit und die Zuverlässigkeit der Fahrspurerkennung erhöht.

Gemäß einer bevorzugten Ausführungsform kann mit einer Stereokamera eine 3-D-Rekonstruktion des Fahrzeugumfelds erstellt werden und aus dieser der Fahrkorridor bestimmt werden. Unter der Annahme, dass die Fahrbahn relativ eben ist, kann auf die 3-D-Information ein Schwellwert angewandt werden und so Bereiche als Korridor ausgeschlossen werden, die eine bestimmte Höhe überschreiten.

Alternativ können aus einer Bildfolge, die mit einer Monokamera aufgenommen wird, räumliche Informationen von der Fahrzeugumgebung erhalten werden. Genannt seien hier beispielhaft Verfahren aus dem Bereich "Structure-from-Motion", bei denen aus zeitlichen Änderungen in der Bildinformation (optischer Fluss) auf die räumliche Struktur der aufgenommenen Szenen geschlossen werden kann.

Es ist vorteilhaft, dass für die Schritte Fahrkorridorerkennung und Strukturerkennung Ergebnisse aus früheren Erkennungen berücksichtigt werden, wobei diese geeignet gefiltert und gewichtet werden (z. B. Kalman-Filter).

Die Korridorerkennung wird dabei bevorzugt unterstützt von Informationen zur eigenen Fahrzeugdynamik, also Daten mindestens eines Fahrzeugdynamiksensors wie z.B. Geschwindigkeit, Gierrate, Lenkwinkel, etc., die auf dem Fahrzeugbus vorliegen.

In einer bevorzugten Ausführungsform werden zur Korridorerkennung auch Daten von weiteren Umfeldsensoren berücksichtigt, z. B. durch eine Fusion der Kameradaten mit den 3-D-Informationen aus Radar- oder Lasersensoren.

In einer vorteilhaften Ausgestaltung der Erfindung kann der erkannte Fahrkorridor den Suchbereich für eine Bildanalyse in der Strukturerkennung einschränken. Die Beschränkung auf relevante Bildabschnitte hat eine bessere Ausnutzung von Ressourcen zur Folge und erniedrigt auch die Wahrscheinlichkeit für Fehlerkennungen. Die Strukturerkennung wird nur in einem Bereich des mindestens einen Bildes durchgeführt, in dem zumindest der erkannte Fahrkorridor liegt. Dazu kann der ermittelte 3-D-Korridor in die vorhandene Bildinformation projiziert und so der Arbeitsbereich für die Strukturerkennung eingeschränkt werden. Beispielsweise kann dann in dem ermittelten Korridor eine Regionensegmentierung, vorteilhaft unter Berücksichtigung von Farbinformation, durchgeführt werden, um die Abgrenzung der eigenen Fahrspur zu bestimmen. Die Regionensegmentierung dient dazu, zumindest Fahrbahn und den Bereich neben der Fahrbahn (z.B. Wiese, Bordstein, Sand) voneinander zu unterscheiden.

Denkbar sind aber auch kantenbasierte Verfahren, die aus Intensitätsunterschieden in der Bildinformation das seitliche Ende des Fahrbahnbelags bestimmen.

In einer vorteilhaften Ausgestaltung der Erfindung beruht die Strukturerkennung ausschließlich oder ergänzend auf einer Korrelationsanalyse, bei der das Bild oder der Bildausschnitt mit gelernten Mustern von typischen Fahrbahnrändern verglichen wird. Korrelationsbasierte Ansätze stellen also eine Alternative dar, bei denen geeignete Templates der Fahrbahn mit der vorhandenen Bildinformation verglichen werden und aus den Übereinstimmungen und Abweichungen auf die Existenz des Fahrbahnrands geschlossen wird.

Vorzugsweise können in einem weiteren Verfahrensschritt Informationen über den ermittelten Fahrbahnrand bzw. über die geschätzte Fahrspur ausgegeben werden. Im Ausgabeschritt können dazu die Information über die gefundenen Fahrbahnränder in eine Form gebracht werden, die für die weitere Verarbeitung im eigenen System oder in anderen Steuergeräten geeignet ist.

Vorteilhaft wird der Verlauf der Fahrbahn als Parameterwerte eines Modells, z. B. Klothoide, wiedergegeben. Denkbar ist aber auch die Verwendung von offenen Polygonzügen. Idealerweise kann der Verlauf in 3-D-Koordinaten (im realen Raum) angegeben werden.

Das in dieser EM beschrieben Verfahren kann vorteilhaft im Zusammenspiel mit bestehenden markierungserkennenden Verfahren verwendet werden, um so eine umfassendere Beschreibung von Fahrspuren zu kommen.

Dazu können z. B. die vorhandenen Ergebnisse geeignet fusioniert und aufbereitet werden, oder die beiden Verfahren können sich gegenseitig vorteilhaft beeinflussen, z.B. kann eine erkannte Mittelmarkierung dazu verwendet werden, den Suchbereich für den Fahrbahnrand dem Verlauf dieser Markierung anzupassen.

Im Verbund ist es auch denkbar, dass die Ergebnisse zu einer gegenseitigen Plausibilisierung herangezogen werden. Dies ist generell auch in Fusion mit anderen Sensoren denkbar, z. B. Plausibilisierung anhand des von einem Radarsystem geschätzten Fahrspurverlaufs.

Im Folgenden wird ein Ausführungsbeispiel eines erfindungsgemäßen Verfahrens angegeben.

Ein Fahrzeug ist mit einer Monokamera ausgestattet, die im Inneren der Windschutzscheibe angeordnet ist und die Umgebung vor dem Fahrzeug erfasst. Mit der Monokamera werden fortlaufend Bilder aufgenommen. Aus einer Bilderfolge werden mittels des optischen Flusses räumliche Strukturen aus den Bildinhalten rekonstruiert. Um den Korridor für das Fahrzeug zu ermitteln, wird aus den räumlichen Strukturen der Freiraum vor dem Fahrzeug bestimmt. Hierbei wird die vertikale Ausdehnung (Höhe) der Struktur analysiert, auf der sich das Fahrzeug befindet. Aus dem Höhenprofil wird geschlossen, wo ein möglicher Freiraum ist, in den sich das Fahrzeug hinein bewegen kann. Der Fahrzeugkorridor entspricht allen möglichen Freiräumen vor dem Fahrzeug.

Die Lage des Fahrzeugkorridors im Bild wird nun verwendet, um dort gezielt Strukturen zu erkennen, z.B. mittels einer Regionensegmentierung. Bei der Regionensegmentierung wird das Bild im Bereich des Fahrzeugkorridors nach Fahrbahnoberfläche, angrenzende Fläche (z.B. Wiese), Erhebungen (z.B. Leitplanke, Pfosten, Bordstein) etc. segmentiert. Zur Segmentierung können z.B. Helligkeits-, Farb-, Größen- und/oder Kantenkriterien verwendet werden.

Daraus ergibt sich der Fahrbahnrand als Grenze zwischen der Fahrbahnoberflächenregion und einer angrenzenden Region.

Der Verlauf des gefundenen Fahrbahnrands kann nun ausgegeben werden. Zum einen kann die Fahrbahnrandlage im Bild übergeben werden an eine Fahrspurmarkierungserkennung, so dass diese Markierungen in der Nähe des Fahrbahnrands leichter und schneller detektieren kann. Zum anderen kann der Verlauf des Fahrbahnrands in realen Koordinaten oder als Parameterwerte einer Klothoide an eine Steuerung einer Lenkunterstützung ausgegeben werden.

## Patentansprüche

1. Verfahren zur Fahrspurerkennung bei unvollständigen oder fehlenden Fahrbahnmarkierungen mittels einer als Fahrzeugkamera verwendeten Stereokamera mit den Schritten
- Aufnahme mindestens eines Bildes einer Fahrzeugumgebung mit der Fahrzeugkamera,
- Erstellung einer räumlichen bzw. 3D-Rekonstruktion der Fahrzeugumgebung aus den Bilddaten,
- Erkennung eines 3D-Fahrkorridors aus der räumlichen Rekonstruktion anhand einer Ermittlung von Freiräumen vor dem Fahrzeug, wobei, Bereiche der räumlichen Rekonstruktion der Fahrzeugumgebung, deren Höhe einen Schwellwert überschreiten, als Freiraum bzw. als 3D-Fahrkorridor ausgeschlossen werden,
- wobei mittels des erkannten 3D-Fahrkorridors der Suchbereich für eine Bildanalyse in der folgenden Strukturerkennung eingeschränkt wird,
- Strukturerkennung im eingeschränkten Suchbereich des mindestens einen Bildes, um den Verlauf mindestens eines Fahrbahnrands zu bestimmen, wobei die Strukturerkennung ein Mustererkennungsverfahren, eine Regionensegmentierung und/oder ein kantenbasiertes Verfahren aufweist, und/oder ausschließlich oder ergänzend auf einer Korrelationsanalyse beruht, und
- Berücksichtigung des mindestens einen Fahrbahnrands bei der Fahrspurerkennung.

2. Verfahren zur Fahrspurerkennung bei unvollständigen oder fehlenden Fahrbahnmarkierungen mittels einer als Fahrzeugkamera verwendeten Monokamera mit den Schritten
- Aufnahme einer Bildfolge einer Fahrzeugumgebung mit der Fahrzeugkamera,
- Erstellung einer räumlichen bzw. 3D-Rekonstruktion der Fahrzeugumgebung aus den Bilddaten,
- Erkennung eines 3D-Fahrkorridors aus der räumlichen Rekonstruktion anhand einer Ermittlung von Freiräumen vor dem Fahrzeug, wobei aus den Änderungen aufeinanderfolgender Bilder auf die räumliche Struktur zumindest der unbewegten Fahrzeugumgebung geschlossen wird, indem die vertikale Ausdehnung der Struktur, auf der sich das Fahrzeug befindet, analysiert und aus dem Höhenprofil geschlossen wird, wo ein möglicher Freiraum ist, in den sich das Fahrzeug hineinbewegen kann,
- wobei mittels des erkannten 3D-Fahrkorridors der Suchbereich für eine Bildanalyse in der folgenden Strukturerkennung eingeschränkt wird,
- Strukturerkennung im eingeschränkten Suchbereich mindestens eines Bildes, um den Verlauf mindestens eines Fahrbahnrands zu bestimmen, wobei die Strukturerkennung ein Mustererkennungsverfahren, eine Regionensegmentierung und/oder ein kantenbasiertes Verfahren aufweist, und/oder ausschließlich oder ergänzend auf einer Korrelationsanalyse beruht, und
- Berücksichtigung des mindestens einen Fahrbahnrands bei der Fahrspurerkennung.

3. Verfahren nach einem der vorhergehenden Ansprüche, wobei zur Erkennung des 3D-Fahrkorridors und/oder zur Strukturerkennung Ergebnisse aus früheren Erkennungen berücksichtigt werden.

4. Verfahren nach einem der vorhergehenden Ansprüche, wobei zusätzlich Daten mindestens eines Fahrzeugdynamiksensors bei der Erkennung des 3D-Fahrkorridors berücksichtigt werden.

5. Verfahren nach einem der vorhergehenden Ansprüche, wobei zusätzlich Daten mindestens eines Radar- und/oder Lidarsensors bei der Erkennung des 3D-Fahrkorridors berücksichtigt werden.

6. Verfahren nach einem der vorhergehenden Ansprüche, wobei bei der Korrelationsanalyse das Bild oder der Bildausschnitt mit Mustern von typischen Fahrbahnrändern verglichen wird.

7. Verfahren nach einem der vorhergehenden Ansprüche, das als weiteren Schritt eine Ausgabe der Information über den ermittelten Fahrbahnrand vorsieht.

8. Verfahren nach einem der vorhergehenden Ansprüche, wobei Informationen über Spurmarkierungen aus einer Spurmarkierungserkennung zur Fahrspurerkennung berücksichtigt werden.

## Claims

1. A method for detecting a lane in the event of incomplete or missing roadway markings by means of a stereo camera which is used as a vehicle camera, having the steps of
- taking at least one image of the surroundings of a vehicle with the vehicle camera,
- creating a spatial or respectively 3D reconstruction of the surroundings of the vehicle from the image data,
- detecting a 3D driving corridor from the spatial reconstruction on the basis of an establishment of free spaces in front of the vehicle, wherein regions of the spatial reconstruction of the surroundings of a vehicle, the heights of which exceed a threshold, are excluded as a free space or respectively as a 3D driving corridor,
- wherein the search field for an image analysis is restricted in the following structure detection by means of the detected 3D driving corridor,
- detecting structures in the restricted search field of the at least one image, in order to determine the course of at least one roadway edge, wherein the structure detection has a pattern detection method, a region segmentation and/or an edge-based method, and/or is exclusively or additionally based on a correlation analysis, and
- taking into account the at least one roadway edge during the lane detection.

2. A method for detecting a lane in the event of incomplete or missing roadway markings by means of a mono camera which is used as a vehicle camera, having the steps of
- taking a sequence of images of the surroundings of a vehicle with the vehicle camera,
- creating a spatial or respectively 3D reconstruction of the surroundings of the vehicle from the image data,
- detecting a 3D driving corridor from the spatial reconstruction on the basis of an establishment of free spaces in front of the vehicle, wherein the changes of successive images indicate the spatial structure of at least the unmoving surroundings of the vehicle, in that the vertical extent of the structure on which the vehicle is located is analysed and the height profile indicates where a possible free space is, into which the vehicle can move,
- wherein the search field for an image analysis is restricted in the following structure detection by means of the detected 3D driving corridor,
- detecting structures in the restricted search field of at least one image, in order to determine the course of at least one roadway edge, wherein the structure detection has a pattern detection method, a region segmentation and/or an edge-based method, and/or is exclusively or additionally based on a correlation analysis, and
- taking into account the at least one roadway edge during the lane detection.

3. The method according to any one of the preceding claims, wherein results from previous detections are taken into account in order to detect the 3D driving corridor and/or to detect structures.

4. The method according to any one of the preceding claims, wherein data of at least one vehicle dynamic sensor are additionally taken into account during the detection of the 3D driving corridor.

5. The method according to any one of the preceding claims, wherein data of at least one radar and/or lidar sensor are additionally taken into account during the detection of the 3D driving corridor.

6. The method according to any one of the preceding claims, wherein the image or the image section is compared with patterns of typical roadway edges during the correlation analysis.

7. The method according to any one of the preceding claims, which provides an output of the information regarding the established roadway edge as a further step.

8. The method according to any one of the preceding claims, wherein information regarding lane markings from a lane marking detection are taken into account in order to detect a lane.

## Revendications

1. Procédé de reconnaissance d'une voie de circulation en cas de marquages routiers incomplets ou manquants au moyen d'une caméra stéréo utilisée comme caméra de véhicule, avec les étapes :
- enregistrement d'au moins une image d'un environnement de véhicule avec la caméra de véhicule,
- génération d'une reconstruction spatiale ou 3D de l'environnement de véhicule à partir des données d'image,
- reconnaissance d'un couloir de circulation 3D à partir de la reconstruction spatiale à l'aide d'une détermination d'espaces libres devant le véhicule, des zones de la reconstruction spatiale de l'environnement de véhicule dont la hauteur dépasse une valeur seuil étant exclues comme espace libre ou comme couloir de circulation 3D,
- la zone de recherche étant limitée pour une analyse d'image dans la reconnaissance de structure suivante, au moyen du couloir de circulation 3D reconnu,
- reconnaissance de structure dans la zone de recherche limitée de l'au moins une image, afin de déterminer le tracé d'au moins un bord de chaussée, la reconnaissance de structure présentant un procédé de reconnaissance de motif, une segmentation de régions et/ou un procédé basé sur les bords, et/ou reposant exclusivement ou de façon complémentaire sur une analyse de corrélation, et
- prise en compte de l'au moins un bord de chaussée lors de la reconnaissance de la voie de circulation.

2. Procédé de reconnaissance d'une voie de circulation en cas de marquages routiers incomplets ou manquants au moyen d'une caméra mono utilisée comme caméra de véhicule, avec les étapes :
- enregistrement d'une séquence d'images d'un environnement de véhicule avec la caméra de véhicule,
- génération d'une reconstruction spatiale ou 3D de l'environnement de véhicule à partir des données d'image,
- reconnaissance d'un couloir de circulation 3D à partir de la reconstruction spatiale à l'aide d'une détermination d'espaces libres devant le véhicule, des conclusions sur la structure spatiale au moins de l'environnement de véhicule immobile étant établies à partir des modifications d'images se succédant, par l'analyse de l'extension verticale de la structure sur laquelle le véhicule se trouve et par la détermination, à partir du profil de hauteur, de la position d'un espace libre possible vers lequel le véhicule peut se diriger,
- la zone de recherche étant limitée pour une analyse d'image dans la reconnaissance de structure suivante, au moyen du couloir de circulation 3D reconnu,
- reconnaissance de structure dans la zone de recherche limitée d'au moins une image, afin de déterminer le tracé d'au moins un bord de chaussée, la reconnaissance de structure présentant un procédé de reconnaissance de motif, une segmentation de régions et/ou un procédé basé sur les bords, et/ou reposant exclusivement ou de façon complémentaire sur une analyse de corrélation, et
- prise en compte de l'au moins un bord de chaussée lors de la reconnaissance de la voie de circulation.

3. Procédé selon l'une des revendications précédentes, des résultats de reconnaissances antérieures étant pris en compte pour la reconnaissance du couloir de circulation 3D et/ou pour la reconnaissance de structure.

4. Procédé selon l'une des revendications précédentes, des données d'au moins un capteur de dynamique de véhicule étant de plus prises en compte lors de la reconnaissance du couloir de circulation 3D.

5. Procédé selon l'une des revendications précédentes, des données d'au moins un capteur radar et/ou un capteur lidar étant de plus prises en compte lors de la reconnaissance du couloir de circulation 3D.

6. Procédé selon l'une des revendications précédentes, l'image ou l'extrait d'image étant comparés à des motifs de bords de chaussée typiques lors de l'analyse de corrélation.

7. Procédé selon l'une des revendications précédentes, prévoyant, comme étape supplémentaire, une sortie de l'information relative au bord de chaussée déterminé.

8. Procédé selon l'une des revendications précédentes, des informations sur les marquages de voie d'une reconnaissance de marquage de voie étant pris en compte pour la reconnaissance de voie de circulation.
